# EUROPÄISCHE PATENTSCHRIFT

(11) **EP 2 412 286 B1**
(45) Veröffentlichungstag und Bekanntmachung des Hinweises auf die Patenterteilung: **17.04.2019**
(21) Anmeldenummer: 11174475.1
(22) Anmeldetag: 19.07.2011
(51) Int. Cl.: A47L 15/42, B29C 45/00

(54) **Wasserführendes Haushaltsgerät, insbesondere Geschirrspülmaschine**
Water-guiding household appliance, in particular dishwasher
Appareil ménager à conduite d'eau, notamment lave-vaisselle

(30) Priorität: 28.07.2010 DE 102010038584
(43) Veröffentlichungstag der Anmeldung: 01.02.2012
(73) Patentinhaber: BSH Hausgeräte GmbH, 81739 München (DE)
(72) Erfinder: Amann, Claus, 89537 Giengen (DE); Büsing, Johannes, 86494 Emersacker (DE); Garcia Purroy, Javier, 31004 Pamplona, Navarra (ES); Seeßle, Manfred, 89547 Gerstetten (DE); Thibaut, Wilhelm, 89567 Sontheim (DE)

(56) Entgegenhaltungen:
- EP-A1- 1 919 346
- EP-A2- 1 340 448
- DE-A1- 2 555 153
- DE-A1-102007 056 919
- US-A1- 2010 122 715

## Beschreibung

Die Erfindung betrifft ein wasserführendes Haushaltsgerät, insbesondere eine Geschirrspülmaschine, mit einem Hydraulikkreislauf, in dem Spülflüssigkeit umwälzbar ist, und einer Filtereinrichtung, die ein Filterelement mit zumindest einer Filteröffnung für den Durchtritt von Spülflüssigkeit aufweist, wobei die Filteröffnung von einer um die Filteröffnung umlaufenden Innenwandung begrenzt ist.

Z.B. aus der DE 102 08 992 B4 ist eine Geschirrspülmaschine bekannt, die eine Filterkombination zum Abfiltern der in der umgewälzten Spülflüssigkeit befindliche Speisereste aufweist. Die Filterkombination weist ein Grobfilter zur Abfilterung größerer Schmutzteilchen und ein Feinfilter zur Abfilterung von in der Spülflüssigkeit fein dispergierten Schmutzpartikeln auf. Das Feinfilter der Filterkombination ist ein perforiertes, flächiges Bauteil, das einen bodenseitigen Pumpentopf gegenüber dem Spülraum eines Spülbehälters abdeckt. Das mit einer Vielzahl von Sieblöchern ausgebildete Feinfilter umgibt das hohlzylindrische Grobfilter. Die Filterfläche des flächigen Feinfilters ist dabei derart gewölbt, dass sie mit einer Neigung trichterförmig auf das Grobfilter zuläuft. Die Filterleistung sowie der Strömungswiderstand des Feinfilters hängen unter anderem von der Anzahl der im Feinfilter vorgesehenen Sieblöcher ab.

Weiterhin zeigt die EP 1 919 346 A1 eine Geschirrspülmaschine mit einem geschlossenen Wasserkreislauf, in dem Waschflotte umgewälzt wird. Die Geschirrspülmaschine umfasst Siebe zum Beseitigen von Verunreinigungen aus einer Spülflotte.

Die DE 10 2007 056 919 A1 zeigt eine Siebvorrichtung für eine Geschirrspülmaschine oder Waschmaschine mit einer Siebfläche, die Löcher aufweist und quer zu einer Anströmrichtung der Siebvorrichtung angeordnet ist.

Die US 2010/122715 A1 beschreibt eine Siebanordnung für Geschirrspülmaschinen mit im Wesentlichen rechteckigen Öffnungen, die durch gitterartige Seitenwände definiert werden. Die Siebanordnung kann aus Kunststoff geformt sein.

Die DE 25 55 153 A1 beschreibt ein Kunststoffsieb für eine Geschirrspülmaschine mit Öffnungen. Der Durchmesser, die Länge und die Neigungsrichtung der jeweiligen Öffnungen werden derart bestimmt, dass eine Spülflüssigkeit das Sieb schnell durchströmt.

Ferner beschreibt die EP 1 340 448 A2 einen Siebfilter für Geschirrspülmaschinen, der eine Vielzahl von Öffnungen aufweist, und in einem Spritzgussverfahren hergestellt wird.

Die Aufgabe der Erfindung besteht darin, ein wasserführendes Haushaltsgerät, insbesondere eine Geschirrspülmaschine, bereitzustellen, dessen Filterkombination einfacher hergestellt werden kann.

Diese Aufgabe wird, wie beansprucht, durch ein wasserführendes Haushaltsgerät, ein Filterelement und ein Verfahren zum Herstellen des Filterelements gelöst.
Gemäß dem kennzeichnenden Teil des Patentanspruches 1 ist zumindest zwischen einem stromaufwärtigen und einem stromabwärtigen Wandabschnitt der Innenwandung der zumindest einen Filteröffnung wenigstens abschnittsweise eine Abstufung gebildet. Die um die Filteröffnung laufende Abstufung trennt den stromaufwärtigen Wandabschnitt vom stromabwärtigen Wandabschnitt. Zusätzlich hiervon weist der stromabwärtige Wandabschnitt einen sich in Strömungsrichtung der Spülflüssigkeit vergrößernden Querschnitt auf.

Ein derartiger Konturverlauf mit Abstufung und/oder sich aufweitenden Querschnitt der Innenwandung ist insbesondere bei der Herstellung des Filterelementes im Kunststoffspritzgussverfahren von Vorteil. In diesem Fall kann eine Spritzgusskammer durch gegenüberliegende Formwerkzeuge gebildet werden. Die Spritzgusskammer bildet eine Negativform des zu formenden Filterelementes. Bei geschlossener Spritzgusskammer sind die Formwerkzeuge mit ihren Kontaktflächen in Anlage. Die Kontaktflächen der Formwerkzeuge liegen dabei in einer Entformungsebene. Bevorzugt kann diese Entformungsebene zwischen dem stromauf- und stromabwärtigen Öffnungsrändern der Filteröffnung vorgesehen sein, nicht jedoch unmittelbar auf der oberen Filterfläche oder der Unterseite des Filterelementes. Dies erlaubt es, sowohl im Eintrittsbereich als auch im Austrittsbereich des Filters strömungsgünstige Abrundungen in Strömungsrichtung vorzusehen, während durch Formwerkzeuge erzeugte scharfkantige Übergänge im Inneren des Filters, d.h. im Bereich der Entformungsebene, angeordnet sind.

Wenn der stromabwärtige Wandabschnitt der jeweiligen Filteröffnung bzw. des jeweiligen Sieblochs einen sich in Strömungsrichtung vergrößernden Querschnitt aufweist, kann zudem der Abfluss von Spülflüssigkeit von der oberen Filterfläche durch die Vielzahl von Sieblöchern nach unten zur Unterseite des Filterelements verbessert werden.

Vorzugsweise ist in der Innenwandung in Strömungsrichtung der Spülflüssigkeit eine umlaufende Hinterschneidung gebildet, deren Ringfläche dem stromabwärtigen Öffnungsrand zugewandt ist. So erfolgt in Strömungsrichtung eine Querschnittserweiterung der Filteröffnung, die den Strömungswiderstand reduziert.

Die beiden Formwerkzeuge können toleranzbedingt insbesondere um einen Formversatz in der Entformungsebene versetzt zueinander in Anlage gebracht sein. Dieser Formversatz führt dazu, dass bei der Formgebung eine obere Hälfte und eine untere Hälfte des Kunststoffteiles entstehen, die zueinander um den Formversatz versetzt sind. Die dadurch entstehenden Versatzkanten erhöhen den Strömungswiderstand des Filterelementes.

Um eine solche Bildung von Versatzkanten zu vermeiden, kann die oben genannte Ringfläche der Abstufung unmittelbar in der Entformungsebene liegen. Dabei kann der stromabwärtige Wandabschnitt um ein Versatzmaß gegenüber dem stromaufwärtigen Wandabschnitt seitlich versetzt angeordnet sein. Mit dem Versatzmaß kann daher ein Formversatz der Formwerkzeuge kompensiert werden. Ein toleranzbedingter Formversatz führt daher nicht dazu, dass scharfe Versatzkanten gebildet werden, die in die Flüssigkeitsströmung einragen. Vor diesem Hintergrund kann es zweckmäßig sein, wenn das Versatzmaß der Ringfläche größer oder zumindest gleich dem toleranzbedingten Formversatz zwischen den Formwerkzeugen ist.

Bevorzugt kann die zumindest eine Filteröffnung als Sechskantloch ausgebildet sein. Die anstelle von Rundlöchern vorgesehenen Sechskantlöcher können - im Vergleich zu einer Rundlochung - bei gleicher verfügbarer Filterfläche in wesentlich größerer Dichte im Filterelement angeordnet werden, ohne dass die Materialstärke der zwischen den Sechskantlöchern verlaufenden Stege reduziert werden müsste. Bei gleichbleibender Materialstärke zwischen den benachbarten Sechskantlöchern kann somit - im Vergleich zu den Rundlöchern - eine Steigerung des Strömungsdurchlasses von über 10% erreicht werden. Dabei braucht eine für die Stabilität des Bauteiles erforderliche Stegdicke im Vergleich zu der Rundlochung nicht geschwächt werden.

Für eine möglichst dichte Anordnung der Sechskantlöcher können diese zweckmäßiger Weise wabenartig im Filterelement angeordnet sein. Die zwischen den Sechskantlöchern verlaufenden Stege können daher mit konstanter Materialstärke ausgebildet werden, wodurch sich die Eigensteifigkeit des Filterelements erhöht.

Das Filterelement kann in einer vorteilhaften Ausführungsform ein flächiges Feinfilter sein. Dieses kann insbesondere als trichterförmiges Bauteil einen Sumpf beziehungsweise Pumpentopf im Spülbehälterboden gegenüber dem darüber angeordneten Spülraum einer Geschirrspülmaschine abdecken. Eine Schlüsselweite der Sechskantlöcher kann vorzugsweise in einem Bereich von 1 mm liegen, wodurch im Geschirrspülmaschinen-Betrieb fein dispergierte Schmutzpartikel aus der Spülflüssigkeit ausgefiltert werden können.

Für eine einfache Herstellung kann das Filterelement ein Kunststoffformteil insbesondere mit einer Dicke im Bereich von 1 bis 2 mm sein, das von den Filteröffnungen durchsetzt ist. Das in Einbaulage trichterförmige Feinfilter bildet somit mit seiner Filterfläche ein Gefälle, entlang dem die Spülflüssigkeit zumindest teilweise in Querströmung bis zu einem hohlzylindrischen Grobfilter strömen kann, der vom Feinfilter umgeben ist. Das Grobfilter kann in einer Einsatzöffnung des Feinfilters eingesetzt sein. Zwischen der Einsatzöffnung und einem Außenrand des Feinfilters kann sich die trichterförmige Filterfläche aufspannen.

In einer bevorzugten Ausführungsform kann die zumindest eine Filteröffnung an ihrem stromaufwärtigen und/oder stromabwärtigen Öffnungsrand mit einer Fase angefast beziehungsweise abgerundet sein. Dadurch können scharfe Kanten an den Öffnungsrändern der Filteröffnung vermieden werden, die den Strömungswiderstand erhöhen würden.

Zur weiteren Reduzierung von Strömungsverlusten kann die Innenwandung der Filteröffnung in einer Querschnittsansicht einen eingeschnürten Konturverlauf aufweisen, bei dem sich der stromaufwärtiger Wandabschnitt der Innenwandung bis zu der Abstufung verjüngt. An der Abstufung ist der Strömungsquerschnitt der Filteröffnung am geringsten. Ausgehend von der Abstufung kann der stromabwärtige Wandabschnitt der Innenwandung in Richtung auf den stromabwärtigen Öffnungsrand ausgeweitet werden.

Die Erfindung und ihre vorteilhaften Weiterbildungen werden nachfolgend anhand von Zeichnungen näher erläutert.
Es zeigen jeweils schematisch:
- Fig. 1: in einer grob schematischen Darstellung den Spülbehälter einer Geschirrspülmaschine, an dessen Boden ein Pumpentopf mit Filterkombination vorgesehen ist;
- Fig. 2: ein erfindungsgemäßes Filterelement der Filterkombination in Alleinstellung;
- Fig. 3: in einer stark vergrößerten perspektivischen Teilansicht Sechskantlöcher des Filterelementes; und
- Fig. 4: in einer ebenfalls stark vergrößerten Seitenschnittdarstellung den Konturverlauf der Innenwandung eines Sechskantloches mit zugehörigen Formwerkzeugen.

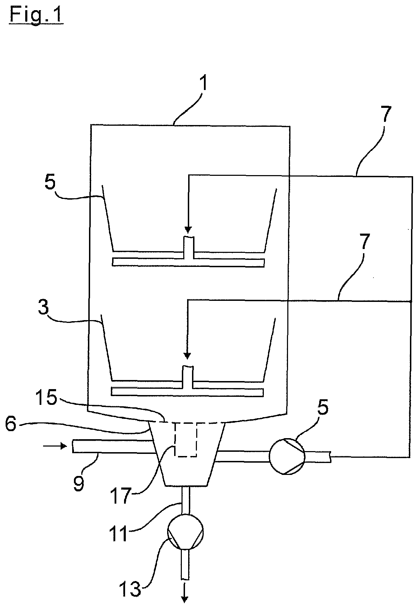

In der Fig. 1 ist grob schematisch eine Geschirrspülmaschine mit einem Spülbehälter 1 gezeigt, in dem nicht dargestelltes Spülgut in Geschirrkörben 3, 5 angeordnet werden kann. Im Bereich des Spülbehälterbodens ist ein Pumpentopf 6 mit nachgeschalteter Umwälzpumpe 5 vorgesehen, die die über Flüssigkeitsleitungen 7 strömungstechnisch mit den Sprüharmen verbunden ist. Der Pumpentopf 6 ist hier beispielhaft über Anschlussstutzen mit einer Frischwasserzuleitung 9 sowie mit einer Ablaufleitung 11 in Verbindung, in der eine Laugenpumpe 13 zum Abpumpen von verunreinigter Spülflüssigkeit aus dem Spülbehälter 1 angeordnet ist.

Wie aus der Fig. 1 hervorgeht, ist die Oberseite des Pumpentopfes 6 mit einem flächigen, trichterförmigen Filterelement 15 abgedeckt. In dem Filterelement 15 ist ein hohlzylindrischer, topfförmiges Grobfilter 17 eingesetzt. Dieses hält Partikel zurück, die die Laugenpumpe 13 blockieren könnten. Das Filterelement 15 wirkt dagegen als ein Feinfilter, der kleinere Schmutzpartikel aus der Spülflüssigkeit abfiltert. Das Filterelement 15 bildet zusammen mit dem Grobfilter 17 eine zweiteilige Filterkombination.

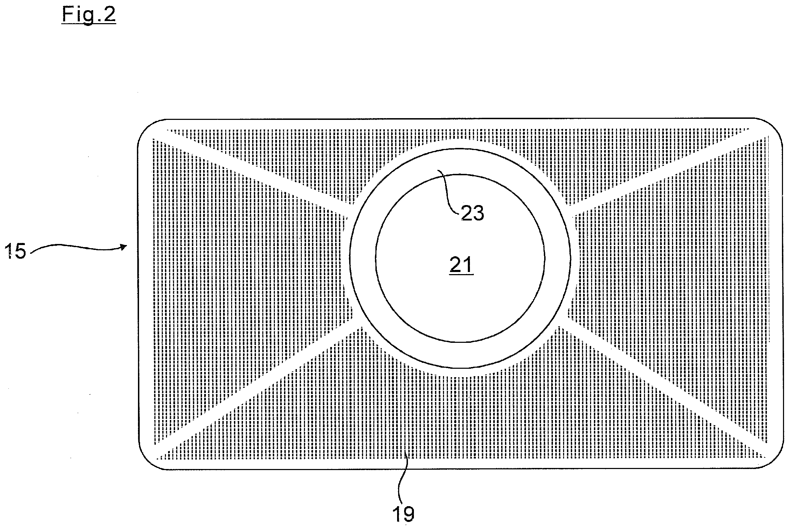

Das Filterelement 15 ist in der Fig. 2 in Alleinstellung dargestellt. Demzufolge ist das Filterelement 15 mit einer Perforation bestehend aus einer Vielzahl von Filteröffnungen 19 ausgebildet. Innerhalb des flächigen Filterelementes 15 ist eine Einsatzöffnung 21 vorgesehen, die von einem Ringflansch 23 des Filterelementes 15 begrenzt ist. In der Einbaulage ist das Grobfilter 17 von oben in die Einsatzöffnung 21 des Filterelementes 15 eingesetzt. Dabei drückt das Grobfilter 17 mit seinem oberen Rand gegen den Ringflansch 23 des Filterelementes 15, wodurch dieses wiederum mit seinem Außenrand 25 gegen die Innenseite des Spülbehälterbodens gedrückt wird.

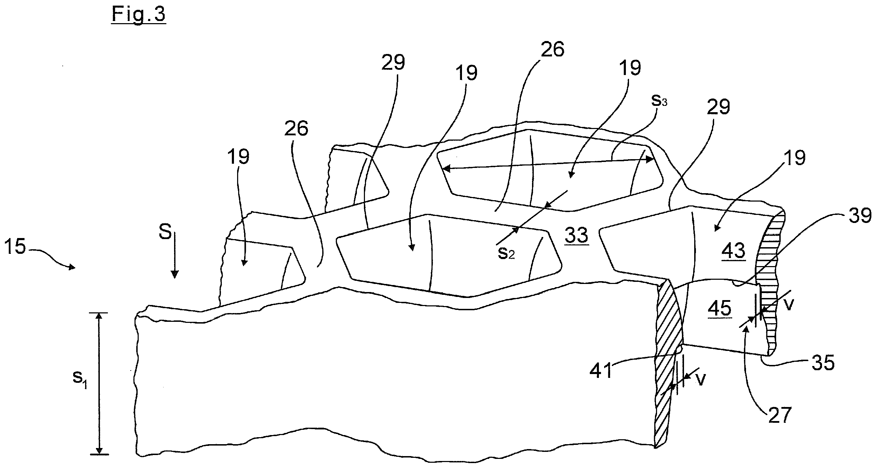

In der Fig. 3 ist ein stark vergrößerter Ausschnitt des Filterelementes 15 gezeigt. Das Filterelement 15 ist als ein Kunststoffspritzgussteil hergestellt. Dessen Materialstärke s₁ liegt vorzugsweise in einer Größenordnung von 1 bis 2 mm. Wie aus der Fig. 3 weiter hervorgeht, sind die Filteröffnungen 19 im vorliegenden Ausführungsbeispiel als Sechskantlöcher ausgebildet. Diese sind in großer Anzahl wabenförmig im Filterelement 15 angeordnet. Die Sechskantlöcher sind außerdem über Randstege 26 voneinander beabstandet, deren Materialstärke s₂ insbesondere in einem Bereich von 0,2 bis 0,5 mm liegen. Die wabenförmige Anordnung der Sechskantlöcher 19 ist zweckmäßigerweise derart gewählt, dass die Randstege 26 mit konstanter Materialstärke verlaufen können.

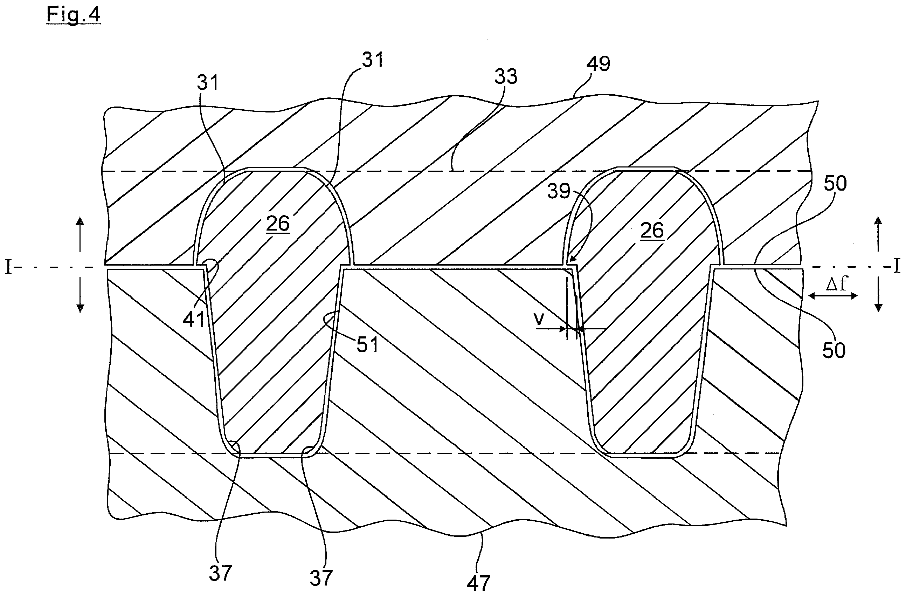

Im Folgenden ist anhand der Fig. 3 und 4 der Konturverlauf der Innenwandung 27 beschrieben, die jedes der Sechskantlöcher 19 umfangsseitig begrenzt. In der Strömungsrichtung S der Spülflüssigkeit betrachtet geht die obere Filterfläche 33 des Filterelementes 15 am stromaufwärtigen Öffnungsrand 29 mit einer in der Fig. 4 gezeigten Fase 31 in die Innenwandung 27 über. In gleicher Weise ist auch am stromabwärtigen Öffnungsrand 35 des Sechskantloches 19 eine Fase 37 ausgebildet. Auf diese Weise wird beim Durchtritt von Spülflüssigkeit durch die Sechskantlöcher 19 ein insgesamt homogenes Strömungsbild erzeugt, wodurch der Strömungswiderstand reduziert werden kann.

Wie aus den Fig. 3 und 4 weiter hervorgeht, ist der Konturverlauf der Innenwandung 27 entlang der Strömungsrichtung nicht kontinuierlich, sondern weist eine umlaufende Abstufung 39 mit einer Ringfläche 41 auf. Diese ist dem stromabwärtigen Öffnungsrand 35 zugewandt. Die Ringfläche 41 läuft um die (in Draufsicht betrachtet) sechskantförmige Öffnung des jeweiligen Sieblochs herum. Die Abstufung 39 unterteilt die Innenwandung 27 in einen stromaufwärtigen Wandabschnitt 43 und einen stromabwärtigen Wandabschnitt 45. Der stromaufwärtige Wandabschnitt 43 verjüngt sich bis zur Abstufung 39, so dass dort der Strömungsquerschnitt des Sechskantloches 19 am geringsten ist. Der stromabwärtige Wandabschnitt weitet sich ausgehend von der Abstufung 39 in Richtung auf den stromabwärtigen Öffnungsrand 35 aus. Wie aus der Fig. 4 weiter hervorgeht, überragt der obere Wandabschnitt 43 quer zur Strömungsrichtung S den unteren Wandabschnitt 45 um ein Versatzmaß v. In der Strömungsrichtung S betrachtet ergibt sich daher durch die Abstufung 41 eine Hinterschneidung. Das Versatzmaß v der Ringfläche 41 beträgt bei einer Schlüsselweite s₃ des Sechskantloches 19 von vorzugsweise ca. 1 mm insbesondere in etwa 5/100 mm.

In der Fig. 4 sind außerdem obere und untere Formwerkzeuge 47, 49 gezeigt, die in Anlage zueinander gebracht sind. Die Formwerkzeuge 47, 49 begrenzen eine Spritzgusskammer 51, die eine Negativform des Filterelementes 15 bildet. Die Anlageflächen 50 der Formwerkzeuge 47, 49 liegen in einer Entformungsebene I. Ausgehend von der Entformungsebene I können die beiden Formwerkzeuge 47, 49 zur Entformung des gebildeten Filterelementes 15 in den angedeuteten Pfeilrichtungen nach oben und unten auseinander bewegt werden.

Gemäß der Fig. 4 liegt die Ringfläche 41 der Abstufung 39 zusammen mit den beiden Anlageflächen 50 der Formwerkzeuge 47, 49 in der Entformungsebene I. Die Entformungsebene I ist daher vorteilhaft sowohl von der oberen Filterfläche 33 als auch von der Unterseite des Filterelements 15 zurückgesetzt.

Durch die Aufteilung der Spritzgussvorrichtung in das obere und das untere Formwerkzeug 47, 49 entsteht prozessbedingt durch unvermeidliche Toleranzen ein Formversatz Δf, bei dem die Formwerkzeuge 47, 49 in der Entformungsebene I geringfügig gegeneinander verschoben sind.

Der Formversatz Δf führt dazu, dass bei der Formgebung eine obere Hälfte und eine untere Hälfte des Filterelementes gebildet werden, die in Seitenrichtung zueinander um den Formversatz versetzt sind. Gegebenenfalls dadurch entstehende Versatzkanten würden den Strömungswiderstand des Filterelementes 15 erhöhen. Aufgrund der in der Entformungsebene I liegenden Ringfläche 41 kann erfindungsgemäß jedoch die Bildung solcher Versatzkanten vermieden werden. Hierzu ist das Versatzmaß v der Ringfläche 41 so bemessen, dass es größer als ein möglicher Formversatz Δf ist.

**Bezugszeichenliste**

| | | | |
|---|---|---|---|
| 1 | Spülbehälter | s₁ | Materialstärke des Filterelements |
| 6 | Pumpentopf | s₂ | Materialstärke der Randstege |
| 5 | Umwälzpumpe | s₃ | Schlüsselweite eines Sechskantlochs |
| 7 | Flüssigkeitsleitungen | v | Versatzmaß |
| 9 | Frischwasserleitung | | |
| 11 | Ablaufleitung | | |
| 13 | Laugenpumpe | | |
| 15 | Filterelement | | |
| 17 | Grobfilter | | |
| 19 | Filteröffnung | | |
| 21 | Einsatzöffnung | | |
| 23 | Ringflansch | | |
| 26 | Randstege | | |
| 27 | Innenwandung | | |
| 29 | stromaufwärtiger Öffnungsrand | | |
| 31 | Fase | | |
| 33 | Filteroberfläche | | |
| 35 | stromabwärtiger Öffnungsrand | | |
| 37 | Fase | | |
| 39 | Abstufung | | |
| 41 | Ringfläche | | |
| 43 | stromaufwärtiger Wandabschnitt | | |
| 45 | stromabwärtiger Wandabschnitt | | |
| 47, 49 | Formwerkzeuge | | |
| 50 | Anlageflächen | | |
| 51 | Spritzgusskammer | | |
| I | Entformungsebene | | |
| Δf | Formversatz | | |

## Patentansprüche

1. Wasserführendes Haushaltsgerät, insbesondere Geschirrspülmaschine, mit einem Hydraulikkreislauf, in dem Spülflüssigkeit umwälzbar ist, und einer Filtereinrichtung (17), die ein Filterelement (15) mit einer Perforation bestehend aus einer Vielzahl von Filteröffnungen (19) für den Durchtritt von Spülflüssigkeit aufweist, wobei das Filterelement (15) ein Kunststoffformteil ist, und wobei zumindest eine Filteröffnung (19) von einer um die zumindest eine Filteröffnung (19) umlaufenden Innenwandung (27) begrenzt ist, **dadurch gekennzeichnet, dass** zumindest zwischen einem stromaufwärtigen und einem stromabwärtigen Wandabschnitt (43, 45) der Innenwandung (27) der zumindest einen Filteröffnung (19) wenigstens abschnittsweise eine Abstufung (39) gebildet ist und dass der stromabwärtige Wandabschnitt (45) einen sich in Strömungsrichtung der Spülflüssigkeit vergrößernden Querschnitt aufweist.

2. Wasserführendes Haushaltsgerät nach Anspruch 1, **dadurch gekennzeichnet, dass** die Abstufung (39) eine an der Innenwandung (27) wenigstens teilweise umlaufende Hinterschneidung bildet.

3. Wasserführendes Haushaltsgerät nach Anspruch 1 oder 2, **dadurch gekennzeichnet, dass** die Abstufung (39) eine dem stromabwärtigen Öffnungsrand (35) zugewandte, die Innenwandung (27) wenigstens teilweise umlaufende Ringfläche (41) bildet.

4. Wasserführendes Haushaltsgerät nach einem der Ansprüche 1 bis 3, **dadurch gekennzeichnet, dass** der stromaufwärtigen Wandabschnitt (43) einen sich in Strömungsrichtung der Spülflüssigkeit verkleinernden Querschnitt aufweist.

5. Wasserführendes Haushaltsgerät nach einem der vorhergehenden Ansprüche, **dadurch gekennzeichnet, dass** die zumindest eine Filteröffnung (19) ein Sechskantloch ist.

6. Wasserführendes Haushaltsgerät nach einem der vorhergehenden Ansprüche, **dadurch gekennzeichnet, dass** die Vielzahl von Filteröffnungen (19) wabenartig in dem Filterelement (15) angeordnet ist.

7. Wasserführendes Haushaltsgerät nach einem der vorhergehenden Ansprüche, **dadurch gekennzeichnet, dass** das Filterelement (15) ein flächiger, trichterförmiger Feinfilter ist, der einen Pumpentopf (6) in einem Spülbehälterboden abdeckt.

8. Wasserführendes Haushaltsgerät nach einem der vorhergehenden Ansprüche, **dadurch gekennzeichnet, dass** das Filterelement (15) eine Einsatzöffnung (21) für einen insbesondere hohlzylindrischen Grobfilter (17) aufweist.

9. Wasserführendes Haushaltsgerät nach einem der vorhergehenden Ansprüche, **dadurch gekennzeichnet, dass** der stromaufwärtige und/oder der stromabwärtige Öffnungsrand (29, 35) der Filteröffnung (19) mit einer Fase (31, 37) angefast beziehungsweise abgerundet ist.

10. Filterelement für ein wasserführendes Haushaltsgerät nach einem der Ansprüche 1 bis 9, das eine Perforation bestehend aus einer Vielzahl von Filteröffnungen (19) für den Durchtritt von Spülflüssigkeit aufweist, wobei das Filterelement (15) ein Kunststoffformteil ist, und wobei zumindest eine Filteröffnung (19) von einer um die zumindest eine Filteröffnung (19) umlaufenden Innenwandung (27) begrenzt ist, **dadurch gekennzeichnet, dass** zumindest zwischen einem stromaufwärtigen und einem stromabwärtigen Wandabschnitt (43, 45) der Innenwandung (27) der zumindest einen Filteröffnung (19) wenigstens abschnittsweise eine Abstufung (39) gebildet ist und dass der stromabwärtige Wandabschnitt (45) einen sich in Strömungsrichtung der Spülflüssigkeit vergrößernden Querschnitt aufweist.

11. Verfahren zum Herstellen eines Filterelements nach Anspruch 10, bei dem das Filterelement (15) in einer zwischen Formwerkzeugen (47, 49) gebildeten Kammer (51) geformt wird.

12. Verfahren zum Herstellen des Filterelements nach Anspruch 11, wobei die Formwerkzeuge (47, 49) bei der Formgebung des Filterelements (15) in einer Entformungsebene (I) in Anlage sind, die im Bereich der Innenwandung (27) zwischen den stromaufwärtigen und stromabwärtigen Öffnungsrändern (29, 35) der Filteröffnung (19) verläuft.

13. Verfahren zum Herstellen des Filterelements nach Anspruch 12, wobei die zwischen den beiden Wandabschnitten (43, 45) vorgesehene Abstufung (39) in der Entformungsebene (I) liegt.

14. Verfahren zum Herstellen des Filterelements nach einem der Ansprüche 11 bis 13, wobei der stromabwärtige Wandabschnitt (45) der Innenwandung (27) um ein Versatzmaß (v) gegenüber dem stromaufwärtigen Wandabschnitt (43) versetzt angeordnet ist, wobei das Versatzmaß (v) größer oder gleich einem toleranzbedingten Formversatz (Δf) zwischen den Formwerkzeugen (47, 49) ist.

## Claims

1. Water-conducting household appliance, in particular a dishwasher, having a hydraulic circuit, in which wash fluid can be circulated, and a filter facility (17), which has a filter element (15) with a perforation consisting of a plurality of filter openings (19) for the passage of wash fluid, wherein the filter element (15) is a plastic moulded part, and wherein at least one filter opening (19) is bounded by an inner wall (27) running around the at least one filter opening (19), **characterised in that** a gradation (39) is formed at least in a segment between an upstream and downstream wall segment (43, 45) of the inner wall (27) of the at least one filter opening (19) and the downstream wall segment (45) has a cross section that increases in the flow direction of the wash fluid.

2. Water-conducting household appliance according to claim 1, **characterised in that** the gradation (39) forms an undercut that runs at least partially around the inner wall (27).

3. Water-conducting household appliance according to claim 1 or 2, **characterised in that** the gradation (39) forms an annular surface (41) that faces the downstream opening edge (35) and runs at least partially around the inner wall (27).

4. Water-conducting household appliance according to one of claims 1 to 3, **characterised in that** the upstream wall segment (43) has a cross section that gets smaller in the flow direction of the wash fluid.

5. Water-conducting household appliance according to one of the preceding claims, **characterised in that** the at least one filter opening (19) is a hexagonal hole.

6. Water-conducting household appliance according to one of the preceding claims, **characterised in that** the plurality of filter openings (19) is disposed in a honeycomb in the filter element (15).

7. Water-conducting household appliance according to one of the preceding claims, **characterised in that** the filter element (15) is a flat, funnel-type fine filter, which covers a pump sump (3) in a wash container base.

8. Water-conducting household appliance according to one of the preceding claims, **characterised in that** the filter element (15) has an insertion opening (21) for an in particular hollow-cylindrical coarse filter (17).

9. Water-conducting household appliance according to one of the preceding claims, **characterised in that** the upstream and/or downstream opening edge (29, 35) of the filter opening (19) is rounded off or chamfered with a chamfer (31, 37).

10. Filter element for a water-conducting household appliance according to one of claims 1 to 9, which has a perforation consisting of a plurality of filter openings (19) for the passage of wash fluid, wherein the filter element (15) is a plastic moulded part, and wherein at least one filter opening (19) is bounded by an inner wall (27) running around the at least one filter opening (19), **characterised in that** a gradation (39) is formed at least in a segment between an upstream and downstream wall segment (43, 45) of the inner wall (27) of the at least one filter opening (19) and the downstream wall segment (45) has a cross section that increases in the flow direction of the wash fluid.

11. Method for producing a filter element according to claim 10, in which the filter element (15) is moulded in a chamber (51) formed between moulding tools (47, 49)

12. Method for producing the filter element according to claim 11, wherein during the moulding of the filter element (15) the moulding tools (47, 49) are in contact in a demoulding plane (I), which runs in the region of the inner wall (27) between the upstream and downstream opening edges (29, 35) of the filter opening (19).

13. Method for producing the filter element according to claim 12, wherein the gradation (39) provided between the two wall segments (43, 45) lies in the demoulding plane (I).

14. Method for producing the filter element according to one of claims 11 to 13, wherein the downstream wall segment (45) of the inner wall (27) is disposed offset by a degree of offset (v) in relation to the upstream wall segment (43), wherein the degree of offset (v) is greater than or equal to a mould offset (Δf) due to tolerances between the moulding tools (47, 49).

## Revendications

1. Appareil ménager à circulation d'eau, notamment lave-vaisselle, comprenant un circuit hydraulique dans lequel du liquide de lavage peut être mis en circulation, et un dispositif de filtrage (17) qui présente un élément filtrant (15) muni d'une perforation constituée d'une pluralité d'ouvertures de filtrage (19) pour le passage de liquide de lavage, l'élément filtrant (15) étant une pièce moulée en matière plastique, et au moins une ouverture de filtrage (19) étant limitée par une paroi intérieure (27) entourant l'au moins une ouverture de filtrage (19), **caractérisé en ce qu'**au moins entre une section de paroi située en amont et une section de paroi située en aval (43, 45) de la paroi intérieure (27) de l'au moins une ouverture de filtrage (19) est formé un échelonnement (39) au moins par sections, et **en ce que** la section (45) située en aval présente une section transversale s'agrandissant en direction d'écoulement du liquide de lavage.

2. Appareil ménager à circulation d'eau selon la revendication 1, **caractérisé en ce que** l'échelonnement (39) forme une contre-dépouille entourant la paroi intérieure (27) au moins en partie.

3. Appareil ménager à circulation d'eau selon la revendication 1 ou 2, **caractérisé en ce que** l'échelonnement (39) forme une surface annulaire (41) entourant la paroi intérieure (27) au moins en partie, tournée vers le bord d'ouverture (35) situé en aval.

4. Appareil ménager à circulation d'eau selon l'une quelconque des revendications 1 à 3, **caractérisé en ce que** la section de paroi (43) située en amont présente une section transversale diminuant en direction d'écoulement du liquide de lavage.

5. Appareil ménager à circulation d'eau selon l'une quelconque des revendications précédentes, **caractérisé en ce que** l'au moins une ouverture de filtrage (19) est un trou hexagonal.

6. Appareil ménager à circulation d'eau selon l'une quelconque des revendications précédentes, **caractérisé en ce que** la pluralité d'ouvertures de filtrage (19) est disposée dans l'élément filtrant (15) en forme de nid d'abeille.

7. Appareil ménager à circulation d'eau selon l'une quelconque des revendications précédentes, **caractérisé en ce que** l'élément filtrant (15) est un filtre fin plat en forme d'entonnoir qui recouvre un puisard de pompage (6) dans un fond de cuve de lavage.

8. Appareil ménager à circulation d'eau selon l'une quelconque des revendications précédentes, **caractérisé en ce que** l'élément filtrant (15) présente une ouverture d'insertion (21) pour un filtre grossier (17) notamment cylindrique creux.

9. Appareil ménager à circulation d'eau selon l'une quelconque des revendications précédentes, **caractérisé en ce que** le bord d'ouverture (29, 35) de l'ouverture de filtre (19), situé en amont et/ou en aval, est biseauté resp. arrondi par un chanfrein (31, 37).

10. Élément filtrant pour un appareil ménager à circulation d'eau selon l'une quelconque des revendications 1 à 9, lequel présente une perforation constituée d'une pluralité d'ouvertures de filtrage (19) pour le passage de liquide de lavage, l'élément filtrant (15) étant une pièce moulée en matière plastique, et au moins une ouverture de filtrage (19) étant limitée par une paroi intérieure (27) entourant l'au moins une ouverture de filtrage (19), **caractérisé en ce qu'**au moins entre une section de paroi située en amont et une section de paroi située en aval (43, 45) de la paroi intérieure (27) de l'au moins une ouverture de filtrage (19) est formé un échelonnement (39) au moins par sections, et **en ce que** la section (45) située en aval présente une section transversale s'agrandissant en direction d'écoulement du liquide de lavage.

11. Procédé de fabrication d'un l'élément filtrant selon la revendication 10, dans lequel l'élément filtrant (15) est formé dans une chambre (51) formée entre des outils de moulage (47, 49).

12. Procédé de fabrication de l'élément filtrant selon la revendication 11, les outils de moulage (47, 49), lors du moulage de l'élément filtrant (15), étant en application dans un plan de démoulage (I) qui s'étend dans la partie de la paroi intérieure (27) entre les bords d'ouverture (29, 35) de l'ouverture de filtre (19), situés en amont et en aval.

13. Procédé de fabrication de l'élément filtrant selon la revendication 12, l'échelonnement (39) ménagé entre les deux sections de paroi (43, 45) étant situé dans le plan de démoulage (I).

14. Procédé de fabrication de l'élément filtrant selon l'une quelconque des revendications 11 à 13, la section de paroi (45) de la paroi intérieure (27), située en aval, étant disposée de manière décalée d'une cote de décalage (v) par rapport à la section de paroi (43) située en amont, la cote de décalage (v) étant supérieure ou égale à un décalage de forme (Δf), dû aux tolérances, entre les outils de moulage (47, 49).
